# EUROPÄISCHE PATENTANMELDUNG

(11) **EP 2 439 068 A1**
(43) Veröffentlichungstag der Anmeldung: **11.04.2012**
(21) Anmeldenummer: 10187010.3
(22) Anmeldetag: 08.10.2010
(51) Int. Cl.: B32B 27/34

(54) **Mehrschichtiges thermoplastisches Faser-Matrix-Halbzeug**

(71) Anmelder: Lanxess Deutschland GmbH, 51369 Leverkusen (DE)
(72) Erfinder: Margraf, Günter, D-41539 Dormagen (DE); Joachimi, Detlev, D-47800 Krefeld (DE); Nickel, Stefanie, D-47877 Willich (DE)

(57) **Zusammenfassung**

Die Erfindung betrifft mehrschichtige thermoplastische Faser-Matrix-Halbzeuge enthaltend einen Kern (A) aus kontinuierlich endlos faserverstärkten thermoplastischen Verbundwerkstoffen oder aus langfaserverstärkten thermoplastischen Verbundwerkstoffen der ganzflächig an Ober- und/oder Unterseite mit wenigstens einer Schicht einer thermoformbaren thermoplastischen Formmasse (B) verbunden ist, welche einen vergleichbaren oder höheren Schmelzpunkt als die Matrix des faserverstärkten thermoplastischen Verbundwerkstoffes im Kern besitzt und bei der Umformtemperatur im Bereich der Scherraten von 1/s ― 100/s eine mindestens um 10% höhere Schmelzviskosität gemessen nach ISO 11443 bei Restfeuchtegehalt < 0,03% aufweist wobei der Kern (A) mindestens eine Verstärkungsfaser enthält sowie deren Verwendung in mechanisch belasteten Bauteilen, bevorzugt in Kraftfahrzeugen, Flugzeugen oder Windenergieanlagen.

## Beschreibung

Die Erfindung betrifft mehrschichtige thermoplastische Faser-Matrix-Halbzeuge sowie deren Verwendung in mechanisch belasteten Bauteilen, bevorzugt in Kraftfahrzeugen, Flugzeugen oder Windenergieanlagen.

Die formschlüssige Kunststoff-Metall-Verbundtechnologie, auch Hybridtechnologie genannt, ist im Automobilbau bei der Fertigung von hochbelastbaren, leichten Strukturbauteilen wie Frontends, Pedallagerböcken oder Bremspedalen fest etabliert und leistet aufgrund der leistungsfähigen Bauteile mit reduziertem Gewicht einen Beitrag zur Verringerung des Kraftstsoffverbrauches. Die Hybridtechnik kombiniert die hohe Steifigkeit und Festigkeit sowie die Duktilität der Metalle mit den guten dynamischen Eigenschaften und der hohen Schlagzähigkeit von Kunststoffen, in der Praxis bevorzugt Polyamid 6.

Bei der herkömmlichen Kunststoff-Metall-Hybridtechnologie werden in der Regel ein oder überlappend mehrere dünnwandige, vorgeformte Metallbleche oder Metallprofile in das Spritzgießwerkzeug eingelegt und dann gezielt mit Polyamid-Verrippungen verstärkt (In-Mold-Assembly- bzw. IMA-Verfahren). Für eine dauerhafte kraft- und formschlüssige Verankerung zwischen Metall und Kunststoff sorgen Durchbrüche, Versickungen und Umspritzungen. Gleichzeitig lassen sich gezielt Funktionen wie Befestigungen und Führungen anbringen, was als Funktionsintegration bezeichnet wird und erhebliches Einsparpotenzial eröffnet. Eine Nachbearbeitung des Formteils entfällt - im Gegensatz zu Aluminium- oder Magnesiumdruckgusskomnponenten ("Hybrid-Frontend als Strukturbauteil", Kunststoffe 03/1999, Carl Hanser Verlag, Seiten 82-86).

Ein neuer Ansatz, das Anwendungs- und Leistungspotential der Hybridtechnologie zu steigern und zusätzliches Gewicht einzusparen, liegt in der Verwendung von thermoplastischen Faser-Matrix-Halbzeugen anstelle von schwereren Metallblechen. Die thermoplastischen Faser-Matrix-Halbzeuge werden in einem Spritzgießwerkzeug gezielt mit Polyamid-Verrippungen und -Versteifungen versehen. Die Thermoplastschmelze geht dabei eine innige Verbindung mit dem Halbzeug ein, sodaß ein stoffschlüssiger Verbund entsteht ("Leichter als Stahl", Kunststoffe 03/2010, Carl Hanser Verlag, Seiten 80-84).

Die für die Bauteilgeometrie erforderliche Umformung des thermoplastischen Faser-Matrix-Halbzeuges kann beispielsweise auf folgenden Wegen durchgeführt werden:
- Umformung des thermoplastischen Faser-Matrix-Halbzeuges in einer Presse und Überführung dieses Teiles in ein Spritzgießwerkezeug
- Umformung des thermoplastischen Faser-Matrix-Halbzeuges im klassischen
   Thermoformverfahren oder in einem Spritzgießwerkzeug während des Schließens der Form
Vor der weiteren Verarbeitung können die Formteile besäumt oder in anderer Weise nachbearbeitet werden.

Faser-Matrix-Halbzeuge sind sowohl auf Basis duroplastischer als auch auf Basis thermoplastischer Kunststoffe verfügbar. Thermoplast-basierte Systeme haben den Vorteil, daß sie mehrfach aufgewärmt und umgeformt werden können und schweißbar sind.

Thermoplastische Faser-Matrix-Halbzeuge werden in folgende Gruppen unterteilt (Schürmann, "Konstruieren mit Faser-Kunststoff-Verbunden", Springer-Verlag Berlin Heidelberg 2005, 2007, Seiten 156-157).:
- Mit Langfasern verstärkte Systeme:
   o GMT: glasmattenverstärkte Thermoplaste;
   o LFT: langfaserverstärkte Thermoplaste
- Mit Endlosfasern verstärkte Systeme: Thermoplastische Prepregs

In Abhängigkeit vom Herstellungsverfahren und dem daraus resultierenden unterschiedlichen Imprägnierungs- und Konsolidierungsgrad unterscheidet man die folgenden thermoplastischen Prepregs ("Faserverstärkte Kunststoffe verarbeiten", Kunststoffe 10/2003, Carl Hanser Verlag, Seiten 189-194):
- Textil- bzw. Hybridgarn-Prepregs: Herstellung mittels textiler Verarbeitungsprozesse aus
   1. Polymerfasern und Verstärkungsfasern oder
   2. Hybridgarn
- Pulver-Prepregs: Herstellung über einen Pulveraufstreuprozeß
- Lösungsmittel-Prepregs: Herstellung über ein Lösungsmittelbad
- Film- und Schmelze-Prepregs: Herstellung über einen Press- oder Kaschierprozess mit einer Schmelze oder einer Folie.

In der vorliegenden Patentschrift werden die Begriffe thermoplastisches Prepreg und Organoblech synonym verwendet.

Organobleche sind leichte und steife Plattenhalbzeuge aus einer thermoplastischen Matrix, in die Endlosfasern, teilweise oder vollständig imprägniert, eingebettet sind. In diesen Faserverbundwerkstoffe werden gezielt hochfeste Endlosfasern mit Kunststoffen wie zum Beispiel Polyamid 6 und Polyamid 66 kombiniert: Während die Fasern maßgeblich die mechanischen Eigenschaften des Verbundes wie Festigkeit und Steifigkeit bestimmen, überträgt der Matrixwerkstoff die Kräfte zwischen den Fasern, stützt diese gegen Ausknicken und schützt sie vor äußeren Angriffen. Bevorzugt werden Endlosfasern aus Glas, Kohlenstoff und Aramid in Form von Geweben oder Gelegen eingesetzt. Die Fasern können beispielsweise in nur eine Richtung orientiert sein (unidirektional) oder in zwei Richtungen rechtwinklig zueinander stehen (orthotrop oder balanciert). Endlosfasern haben den Vorteil, dass sie sehr gestreckt mit hohem Orientierungsgrad und dadurch in größeren Mengen in die Themoplastmatrix eingebracht werden können. Außerdem ermöglichen Sie den Kraftfluss zwischen Krafteinleitungspunkten rein über die Fasern, was die mechanische Leistungsfähigkeit des Bauteils steigert.

Zur Fertigung von Hybridbauteilen wird das Organoblech zunächst im Tiefziehverfahren in kurzen Zykluszeiten rein physikalisch umgeformt bzw. drapiert. Es entsteht ein Vorformling, der gegebenenfalls bis kurz unter den Schmelzpunkt der Polymermatrix erwärmt, dann in ein Spritzgießwerkzeug eingelegt und an ausgewählten Stellen gezielt mit Verrippungen aus Polyamid 6 verstärkt wird.

Besonders Bauteilecken stellen eine Herausforderung für den Umformungsprozeß dar, da in diesen Bereichen sowohl ein sehr hoher Umformungsgrad als auch eine komplexe dreidimensionale Geometrie vorliegen ("Mehr Verarbeitungsfreiheit für Composites", Kunststoffe 1/2010, Carl Hanser Verlag, Seiten 26-28). Eine exakte Abbildung der Bauteilecken und ―kanten ist oftmals nicht möglich, zusätzlich kann es durch das Aufbringen von Druck im Zuge der Umformung zu Schädigungen der Endlos-Faserverstärkung und somit zu einer Schwächung des erzeugten Bauteiles kommen. Darüberhinaus verschiebt sich beim Umformen das Endlosfaser-Gewebe. Beispielseise kann die orthogonale Anordnung der Fasern verloren gehen, was je nach Bauteilbereich zu verschiedenen Orientierungen und Faserwinkeln und damit zu lokal unterschiedlichen Steifigkeiten und Festigkeiten führt.

Die Aufgabe der vorliegenden Erfindung bestand nun darin, faserverstärkte thermoplastische Plattenhalbzeuge zur Verfügung zu stellen, die eine verbesserte thermische Umformung im Vergleich zu den bekannten Halbzeugen erlauben.

Die Aufgabe wurde überraschenderweise gelöst durch mehrschichtige thermoplastische in Sandwich-Bauweise aufgebaute Plattenhalbzeuge enthaltend einen Kern (A) der Schichtdicke 0,3 bis 5 mm aus kontinuierlich endlos faserverstärkten thermoplastischen Verbundwerkstoffen oder aus langfaserverstärkten thermoplastischen Verbundwerkstoffen der ganzflächig an Ober- und/oder Unterseite mit wenigstens einer Schicht einer thermoformbaren thermoplastischen Formmasse (B) der Schichtdicke 0,1 bis 3 mm verbunden ist, welche einen vergleichbaren oder höheren Schmelzpunkt als die Matrix des faserverstärkten thermoplastischen Verbundwerkstoffes im Kern besitzt und bei der Umformtemperatur im Bereich der Scherraten von 1/s ― 100/s eine mindestens um 10% höhere Schmelzviskosität gemessen nach ISO 11443 bei Restfeuchtegehalt < 0,03% aufweist wobei der Kern (A) mindestens eine Verstärkungsfaser zu 0,001 bis 80 Gew.-% enthält und diese einen Faserdurchmesser von 3 bis 40 µm aufweist.

Zur Klarstellung sei angemerkt, dass vom Rahmen der vorliegenden Erfindung alle nachfolgend aufgeführten, allgemeinen oder in Vorzugsbereichen genannten Definitionen und Parameter in beliebigen Kombinationen umfasst sind.

Bevorzugt weist der Kern (A) eine Dicke von 0,5 - 4 mm, besonders bevorzugt von 1 - 2,5 mm auf.

Bevorzugt weist das an Ober- und/oder Unterseite von Kern (A) aufgebrachte thermoplastische Material der Schichten (B) jeweils eine Dicke von 0,2 - 2 mm, besonders bevorzugt von 0,6 - 1,5 mm auf.

Bevorzugt weist die Formmasse der Schichten (B) bei der Umformtemperatur im Bereich der Scherraten von 1/s ― 100/s eine mindestens 25 % höhere, besonders bevorzugt eine 50 % höhere und ganz besonders bevorzugt eine mindestens 80 % höhere Schmelzviskosität gemessen nach ISO 11443 bei einem Restfeuchtegehalt < 0,03% auf.

Bevorzugt sind die Schichten (A) und die Schichten (B) durch Kleben, Verschweissen, Laminieren, Kaschieren, oder Kalandrieren miteinander verbunden.

Erfindungsgemäß bevorzugt werden die Schichten (B) durch Beschichtungsprozesse auf den Kern (A) aufgebracht.

Der Kern (A) besteht erfindungsgemäß aus einem Verstärkungsfaserngebilde in Form von Endlosfasern oder geschnittenen Langfasern und der umschliessenden Matrix aus thermoplastischem Kunststoff.

Als thermoplastische Matrix enthält der Kern (A) mindestens ein thermoplastisches Polymer oder Copolymer. Bevorzugt eignen sich Polyamide, Polyester oder Polypropylen. Besonders bevorzugt eignen sich Polyamid 6 (PA 6) und Polyamid 66 ( PA 66) mit relativen Lösungsviskositäten in m-Kresol von 2,0 bis 4,0 sowie Polybutylenterephthalat, insbesondere bevorzugt Polyamid 6 mit einer relativen Lösungsviskosität in m-Kresol von 2,3 ― 3,0 sowie Polybutylenterephthalat. Die erfindungsgemäßen Polymere können nach verschiedenen Verfahren hergestellt werden, aus unterschiedlichen Bausteinen synthetisiert werden und im speziellen Anwendungsfall allein oder in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern) und gegebenenfalls weiteren Additiven, zu Werkstoffen mit speziell eingestellten Eigenschaftskombinationen ausgerüstet werden. Geeignet sind auch Blends mit Anteilen von anderen Polymeren, bevorzugt von Polyethylen, Polypropylen, ABS, wobei gegebenenfalls ein oder mehrere Kompatibilisatoren eingesetzt werden können. Die Eigenschaften der Polyamide können nach Bedarf durch Zusatz von Elastomeren verbessert werden, beispielsweise im Hinblick auf die Schlagzähigkeit der Polymercompounds.

Zur Herstellung von Polyamiden sind eine Vielzahl von Verfahrensweisen bekannt geworden, wobei je nach gewünschtem Endprodukt unterschiedliche Monomerbausteine oder verschiedene Kettenregler zur Einstellung eines angestrebten Molekulargewichtes oder auch Monomere mit reaktiven Gruppen für später beabsichtigte Nachbehandlungen eingesetzt werden.

Als bevorzugt einzusetzende Polyamide werden Polyamide eingesetzt, deren Herstellung über die Polykondensation in der Schmelze erfolgt. In diesem Rahmen wird auch die hydrolytische Polymerisation von Lactamen als Polykondensation verstanden.

Erfindungsgemäß bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können. Als Edukte kommen bevorzugt aliphatische und/oder aromatische Dicarbonsäuren, besonders bevorzugt Adipinsäure, 2,2,4- Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Hexamethylendiamin, 1,9-Nonandiamin, 2,2,4- und 2,4,4-Trimethyl- hexamethylendiamin, die Isomeren Diaminodicyclohexylmethane, Diaminodicyclohexylpropane, Bis-aminotnethyl-cyclohexan, Phenylendiamine, Xylylendiamine, Aminocarbonsäuren, insbesondere Aminocapronsäure, oder die entsprechenden Lactame in Betracht. Copolyamide aus mehreren der genannten Monomeren sind eingeschlossen.

Besonders bevorzugt werden Polyamide aus Lactamen eingesetzt, besonders bevorzugt werden Caprolactame, ganz besonders bevorzugt wird ε-Caprolactam eingesetzt.

Als thermoplastische Matrix enthält der Kern (A) bevorzugt durch aktivierte anionische Polymerisation hergestelltes Polyamid oder durch aktivierte anionische Polymerisation hergestelltes Copolyamid mit Polycaprolactam als Hauptbestandteil. Die aktivierte anionische Polymerisation von Lactamen zu Polyamiden wird in technischem Massstab so durchgeführt, dass man einerseits eine Lösung von Katalysator in Lactam, gegebenenfalls mit Schlagzähmodifikator, und andererseits eine Lösung von Aktivator in Lactam herstellt, wobei üblicherweise beide Lösungen so zusammengesetzt sind, dass ein Zusammengeben im gleichen Verhältnis die gewünschte Gesamtrezeptur ergibt. Weitere Additive können gegebenenfalls der Lactamschmelze zugegeben werden. Die Polymerisation erfolgt durch Vermischen der Einzellösungen zur Gesamtrezeptur bei 80°C bis 200°C, bevorzugt 100°C bis 140°C. Als Lactame kommen cyclische Lactame mit 6 bis 12 C-Atomen in Frage, bevorzugt Laurinlactam und besonders bevorzugt ε-Caprolactam. Der Katalysator im erfindungsgemässen Sinne ist ein Alkali- oder Erdalkalilactamat, bevorzugt als Lösung in Lactam, besonders bevorzugt Natriumcaprolactamat in ε-Caprolactam. Als Aktivator im erfindungsgemässen Sinne können N-Acyllactame oder Säurechloride oder, bevorzugt, aliphatische Isocyanate, besonders bevorzugt Oligomere des Hexamethylendiisocyanats eingesetzt werden. Als Aktivator kann sowohl die Reinsubstanz wie auch bevorzugt eine Lösung, bevorzugt in N-Methylpyrrolidon, dienen.

In einer weiteren bevorzugten Ausführungsform enthält der Kern (A) eine thermoplastische Matrix ausgewählt aus der Gruppe der Polyester, bevorzugt Polyalkylenterephthalate, besonders bevorzugt der Polybutylenterephthalate und Polyethylenterephthalate, ganz besonders bevorzugt des Polybutylenterephthalats.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl Hanser Verlag, München 1973).

Bevorzugte Polyalkylenterephthalate enthalten mindestens 80 Mol-%, vorzugsweise 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykol- und/oder Propandiol-1,3-und/oder Butandiol- 1 ,4-reste.

Die bevorzugten Polyalkylenterephthalate können neben Terephthalsäureresten bis zu 20 Mol-% Reste anderer aromatischer Dicarbonsäuren mit 8 bis 14 C- Atomen oder Reste aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernsteinsäure, Adipinsäυre, Sebacinsäure, Azelainsäure, Cyclohexandiessigsäure, Cyclohexandicarbonsäure.

Die bevorzugten Polyalkylenterephthalate können neben Ethylen- bzw. Propaπdiol-1,3- bzw. Butandiol-1,4-glykolresten bis zu 20 Mol-% andere aliphatische Diole mit 3 bis 12 C-Atomen oder bis zu 20 Mol -% cycloaliphatische Diole mit 6 bis 21 C-Atomen enthalten, bevorzugt Reste von PropandioI-1,3, 2- Ethylpropandiol-1,3, Neopentylglykol, Pentan-diol-1,5, Hexandiol-1.6, Cyclohexan-dimethanoi- 1,4, 3-Methylpentandiol-2,4, 2-Methylpentandiol-2,4, 2,234-Trimethy!pentandiol-1,3 und -1,6,2- Ethylhexandiol-1,3 2,2-Diethylpropandiol-1,3, Hexandiol-2,5, 1,4-Di-(ß-hydroxyethoxy)-benzol, 2,2-Bis-(4-hydroxycyclohexyl)-prop an, 2,4-Dihydroxy-1,1,3,3-tetramethyl-cyclobutan, 2,2-bis-(3- ß-hydroxyethoxyphenyl)-propan und 2,2-bis-(4-hydroxypropoxyphenyl)-propan.

Besonders bevorzugt sind Polyalkylenterephthalate, die allein aus Terephthalsäure und deren reaktionsfähigen Derivaten, insbesondere deren Dialkylestern, und Ethylenglykol und/oder Propandiol- 1 ,3 und/oder Butandiol-1,4 hergestellt werden, insbesondere bevorzugt Polyethylen-und Polybutylen- terephthalat und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt werden. Besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,3 cm³/g bis 1,5 cm³/g, vorzugsweise 0,4 cm³/g bis 1,3 cm³/g, besonders bevorzugt 0,5 cm³/g bis 1,0 cm³/g jeweils gemessen in Phenol/o-Dichlorbenzol (1:1 Gew.-Teile) bei 25°C.

Die erfindungsgemäß einzusetzenden thermoplastischen Polyester können auch im Gemisch mit anderen Polyestern und/oder weiteren Polymeren eingesetzt werden.

Der Kern (A) enthält bevorzugt 30 bis 75 Gew.-% mindestens einer Verstärkungsfaser, wobei die Faserdurchmesser bevorzugt 6-25 µm, besonders bevorzugt 8-18 µm betragen. Folgende Verstärkungsfasern können zum Beispiel als kontinuierliche (endlose) Faserverstärkung bzw. Langfaserverstärkung alleine oder in Mischungen eingesetzt werden:
- Glasfasern (Oberbach, Baur, Brinkmann, Schmachtenberg, "Saechtling Kunststoff Taschenbuch", Carl Hanser Verlag München Wien 2004, Seiten 644-647),
- metallisierte Glasfasern
- Kohlenstofffasern (Oberbach, Baur, Brinkmann, Schmachtenberg, "Saechtling Kunststoff Taschenbuch", Carl Hanser Verlag München Wien 2004, Seite 648),
- Naturfasern (Oberbach, Baur, Brinkmann, Schmachtenberg, "Saechtling Kunststoff Taschenbuch", Carl Hanser Verlag München Wien 2004, Seiten 650-652, 778-779),
- Kunststofffasern, insbesondere Hochtemperatur-Kunststofffasern (Oberbach, Baur, Brinkmann, Schmachtenberg, "Saechtling Kunststoff Taschenbuch", Carl Hanser Verlag München Wien 2004, Seiten 648-650), bevorzugt Aramidfasern (Kunststoff-Handbuch, Bd. 3/4, Seiten 106-107, Carl Hanser Verlag München Wien 1998),
- Stahlfasern,
- Mineralfasern, insbesondere Basaltfasern.

Die Fasern können gegebenenfalls oberflächenmodifiziert sein, bevorzugt mit einem Haftvermittler bzw. Haftvermittlersystem bevorzugt auf Silanbasis. Die Vorbehandlung ist jedoch nicht unbedingt erforderlich.

Insbesondere bei Verwendung von Glasfasern können zusätzlich zu Silanen auch Polymerdispersionen, Emulgatoren, Filmbildner (beispielsweise Polyepoxid-, Polyether-, Polyolefin-, Polyvinylacetat-, Polyacrylat- oder Polyurethanharze oder Mischungen davon), Verzweiger, weitere Haftvermittler, Gleitmittel, pH-Puffersubstanzen und/oder Glasfaserverarbeitungshilfsmittel (beispielsweise Netzmittel und/oder Antistatika) verwendet werden. Die weiteren Haftvermittler, Gleitmittel und sonstigen Hilfsstoffe, Verfahren zur Herstellung der Schlichten, Verfahren zur Beschlichtung und Nachbearbeitung der Glasfasern sind bekannt und beispielsweise in K.L. Löwenstein, "The Manufacturing Technology of Continuous Glass Fibres", Elsevier Scientific Publishing Corp., Amsterdam. London, New York, 1983, beschrieben. Die Glasfasern können über beliebige Methoden beschlichtet werden, beispielsweise mit Hilfe geeigneter Vorrichtungen, wie z.B. Sprüh-oder Walzenapplikatoren. Auf die mit hoher Geschwindigkeit aus Spinndüsen gezogenen Glasfilamente können beispielsweise sofort nach ihrem Erstarren, d.h. noch vor dem Aufwickeln oder Schneiden, Schlichten aufgetragen werden. Es ist aber auch möglich, die Fasern im Anschluss an den Spinnprozess in einem Tauchbad zu beschlichten.

Die erfindungsgemäß insbesondere bevorzugt einzusetzenden Glasfasern können entweder eine kreisförmige Querschnittsfläche und einen Filament-Durchmesser von 6 und 18 µm, bevorzugt zwischen 9 und 15 µm, oder eine flache Gestalt und nicht-kreisförmige Querschnittsfläche, deren Hauptquerschnittsachse eine Breite im Bereich von 6 ― 40 µm und deren Nebenquerschnittsachse eine Breite im Bereich von 3 ― 20 µm besitzt, aufweisen. Die Glasfaser kann ausgewählt sein aus der Gruppe der E-Glasfasern, A-Glasfasern, C-Glasfasern, D-Glasfasern, S-Glasfasern und / oder R-Glasfasern. Die Fasern können mit einem geeigneten Schlichtesystem und einem Haftvermittler bzw. Haftvermittlersystem z.B. auf Silanbasis ausgerüstet sein.

Gebräuchliche Haftvermittler auf Silanbasis für die Vorbehandlung sind Silanverbindungen beispielsweise der allgemeinen Formel (I)

(X-(CH₂)_{q})ₖ-Si-(O-CᵣH2ᵣ₊₁)₄₋ₖ (I)

in der die Substituenten folgende Bedeutung haben:
X für NH₂-, HO- oder 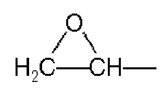 steht,
q für eine ganze Zahl von 2 bis 10, bevorzugt 3 bis 4 steht,
r für eine ganze Zahl von 1 bis 5, bevorzugt 1 bis 2 steht und
k für eine ganze Zahl von 1 bis 3, bevorzugt 1 steht.

Besonders bevorzugte Haftvermittler sind monomere organofunktionelle Silane, insbesondere 3-Aminopropyltrimethoxysilan, Aminobutyltrimethoxysilan, 3-Aminopropyltriethoxysilan, Aminobutyltriethoxysilan, 3-Aminopropyltris-methoxyethoxysilan, 3-Aminopropyl-methyl-diethoxysilan, N-Methyl-2-Aminoethyl-3-aminopropyltrimethoxysilan, N-Methyl-2-Aminoethyl-3-aminopropyl-methyl-dimethoxysilan, N-Methyl-3-aminopropyltrimethoxysilan, 3-Glycidyloxypropyltrimethoxysilan, 3-Methacryloxypropyltrimethoxysilan, 3-Mercaptopropyltrimethoxysilan, Vinyltriethoxysilan, Vinyltrimethoxysilan, N-β-(aminoethyl)-γ-aminopropyltrimethoxysilan (Dynasilan Damo von Hüls AG), N-β-(aminoethyl)-γ-aminopropyltriethoxysilan, N-β-(aminoethyl)-γ-aminopropylmethyldimethoxysilan, N-β-(aminoethyl)-N-β-(aminoethyl)-γ-aminopropyltri-methoxysilan.

Die Silanverbindungen werden im Allgemeinen in Mengen von 0,05 bis 5 Gew.-%, vorzugsweise 0,1 bis 1,5 Gew.-% und insbesondere in Mengen von 0,25 bis 1 Gew.-% bezogen auf den Füllstoff zur Oberflaechenbeschichtung eingesetzt.

Die Endlosfaserverstärkung besteht bevorzugt aus Verstärkungstextilien in Form von Gelegen, Geweben, Geflechten, Gestricken und/oder Gesticken ("Maßgeschneiderte Vertsärkungstextilien", Kunststoffe 06/2003, Carl Hanser Verlag, Seiten 46-49). Sie kann ebenfalls aus Vliesen, Faserkabeln oder Rovings bestehen.

Die Herstellung des Kernes (A) kann durch Imprägnierung in kontinuierlichen oder diskontinuierlichen Prozessen der in Form von Verstärkungstextilien, Vliesen, Faserkabeln oder Rovings vorliegenden Verstärkungsfasern mit thermoplastischen Formmassen erfolgen (Oberbach, Baur, Brinkmann, Schmachtenberg, "Saechtling Kunststoff Taschenbuch", Carl Hanser Verlag München Wien 2004, Seiten 207-209). Folgende Vorgehensweisen der Imprägnierung sind bevorzugt: mittels Pulveraufstreuprozeß, mittels Press- oder Kaschierprozess mit einer Schmelze oder einer Folie oder mittels eines Lösungsmittelbades ("Faserverstärkte Kunststoffe verarbeiten", Kunststoffe 10/2003, Carl Hanser Verlag, Seiten 189-194).

Die Herstellung des Kernes (A) kann weiterhin mittels textiler Verarbeitungsprozesse aus Fasern der thermoplastischen Matrix und der Verstärkungsfasern oder aus Hybridgarnen und anschließender thermischer Behandlung mit oder ohne Aufbringung von Druck erfolgen ("Faserverstärkte Kunststoffe verarbeiten", Kunststoffe 10/2003, Carl Hanser Verlag, Seiten 189-194).

Die Herstellung des Kernes (A) kann aber auch durch Imprägnierung des Verstärkungsfasergebildes mit einer Lactamschmelze enthaltend Aktivator und Katalysator und anschließender aktivierter anionischer Polymerisation, wie beispielsweise in EP19970101003 beschrieben, erfolgen. Das Verstärkungsfasergebilde kann dabei von mindestens einer Seite flächig mit einer Folie oder Platte gefertigt aus einer thermoformbaren thermoplastischen Formmasse für die Schichten (B) bedeckt sein. Besonders bevorzugt ist eine Ausführungsform, bei der Kern (A) beidseitig flächig mit einer Folie oder Platte gefertigt aus einer thermoformbaren thermoplastischen Formmasse für die Schichten (B) bedeckt ist.

Das mit dem Kern (A) verbundene thermoformbare thermoplastische Material der Schichten (B) weist einen vergleichbaren oder höheren Schmelzpunkt als die Matrix des faserverstärkten thermoplastischen Verbundwerkstoffes im Kern (A) auf. Das thermoplastische Material der Schichten (B) besitzt bei der Umformtemperatur im Bereich der Scherraten von 1/s ― 100/s eine mindestens um 10% höhere, bevorzugt mindestens 25 % höhere, besonders bevorzugt 50 % höhere und ganz besonders bevorzugt mindestens 80 % höhere Schmelzviskosität als der Kern (A) gemessen nach ISO 11443 bei einem Restfeuchtegehalt < 0,03% mit einem Kapillar-Rheometer RH7 von Malvern Instruments Ltd und einer Kapillare mit einem Innendurchmesser von 1.0 mm, einer Länge von 32 mm und einem Eintrittswinkel von 180°.

Als thermoplastisches Material der Schichten (B) wird mindestens ein thermoplastisches Polymer oder Copolymer verwendet. Bevorzugt eignen sich Polyamid oder Polyester. Besonders bevorzugt eignen sich Polyamid 6 (PA 6) und Polyamid 66 (PA 66) mit relativen Lösungsviskositäten in m-Kresol größer 3,0, insbesondere bevorzugt Polyamid 6 mit einer relativen Lösungsviskosität in m-Kresol größer 3,5 aber auch Polybutylenterephthalat.

Besteht die thermoplastische Matrix des Kernes (A) überwiegend aus Polypropylen, ist ein thermoplastisches Material für die Schichten (B) enthaltend Polyamid 6, Polypropylen und Kompatibilisator (z.B. mit Maleinsäureanhydrid modifiziertes Polypropylen) besonders geeignet.

In einer bevorzugten Ausführungsform kann die thermoplastische Formmasse der Schichten (B) 0,01 bis 10 Gew.-Teile, bevorzugt 0,1 bis 6 Gew.-Teile, besonders bevorzugt 0,5 bis 5 Gew.-Teile dioder mehrfunktionelle verzweigend oder kettenverlängernd wirkende Additive enthaltend mindestens zwei und höchstens 15 verzweigend oder kettenverlängernd wirkende funktionelle Gruppen pro Molekül enthalten. Als verzweigend bzw. kettenverlängende Additive kommen niedermolekulare und oligomere Verbindungen in Frage, die über mindestens zwei und höchstens 15 verzweigend oder kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, blockierte Isocyanate, Epoxide, Maleinsäureanhydrid, Oxazoline, Oxazine, Oxazolone.

Insbesondere bevorzugt sind Diepoxide auf Basis Diglycidylether (Bisphenol und Epichlorhydrin), auf Basis Aminepoxidharz (Anilin und Epichlorhydrin), auf Basis Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei und höchstens 15 Epoxidgruppen pro Molekül.

Besonders bevorzugt sind Glycidylether, ganz besonders bevorzugt Bisphenol A-Diglycidylether und epoxidierte Fettsäureester des Glycerins, sowie auch ganz besonders bevorzugt epoxidiertes Sojaöl (CAS 8013-07-8).

Epoxidiertes Sojaöl ist als Co-Stabilisator und Weichmacher für Polyvinylchlorid bekannt (Plastics Additives Handbook, 5th Edition, Hanser-Verlag, München, 2001, S.460-462). Es wird insbesondere in Polyvinylchlorid-Dichtungen von Metalldeckeln zum luftdichten Verschließen von Gläsern und Flaschen verwendet.

Zur Verzweigung/Kettenverlängerung sind besonders bevorzugt geeignet:
1. Poly- bzw. Oligoglycidyl- oder Poly-(ß-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschließender Alkalibehandlung.
   Poly- bzw. Oligoglycidyl- oder Poly-(ß-methylglycidyl)-ether leiten sich bevorzugt ab von acyclischen Alkoholen, wie Ethylenglykol, Diethylenglykol und höhereren Poly-(oxyethylen)-glykolen, Propan-1,2-diol, Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylpropan, Bistrimethylolpropan, Pentaerythrit, Sorbit sowie von Polyepichlorhydrinen.
   Sie leiten sich aber auch bevorzugt ab von cycloaliphatischen Alkoholen wie 1,3-oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyelhyl)anilin oder p,p'-Bis-(2-hydroxyethyl-amino)-diphenylmethan.
   Die Epoxidverbindungen können sich bevorzugt auch von einkernigen Phenolen ableiten, insbesondere von Resorcin oder Hydrochinon; oder sie basieren auf mehrkernigen Phenolen insbesondere auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dlhydroxydiphenylsulfon oder auf unter sauren Bedingungen erhaltene Kondensationsprodukte von Phenolen mit Formaldehyd wie Phenol-Novolake.
2. Poly- bzw. Oligo-(N-glycidyl)-Verbindungen ferner erhältlich durch Dehydrochlorierung der Reaktionsprodukte von Epichlorhydrin mit Aminen, die mindestens zwei Aminowasserstoffatome enthalten. Bei diesen Aminen handelt es sich bevorzugt um Anilin, Toluidin, n-Butylamin, Bis-(4-aminophenyl)methan, m-Xylylendiamin oder Bis-(4-methylaminophenyl)-methan, aber auch N,N,O-Triglycidyl-m-aminophenyl oder N,N,O-Triglycidyl-p-aminophenol.
   Zu den Poly-(N-glycidyl)-Verbindungen zählen aber auch bevorzugt N,N'-Diglycidylderivate von Cycloalkylenharnstoffen, besonders bevorzugt Ethylenharnstoff oder 1,3-Propylenharnstoff, und N,N'-Diglycidylderivate von Hydantoinen, insbesondere 5,5-Dimethylhydantoin.
3. Poly- bzw. Oligo-(S-glycidyl)-Verbindungen insbesondere Di-S-glyci-dylderivate, die sich von Dithiolen, bevorzugt Ethan-1,2-dithiol oder Bis-(4-mercaptomethylphenyl)-ether ableiten.
4. Epoxidierte Fettsäureester des Glycerins, insbesondere epoxidierte Pflanzenöle. Sie werden durch Epoxidierung der reaktionsfähigen Olefingruppen von Triglyceriden ungesättigter Fettsäuren erhalten. Die Herstellung epoxidierter Fettsäureester des Glycerins kann ausgehend von ungesättigten Fettsäureestern des Glycerins, bevorzugt von Pflanzenölen, und organischen Peroxycarbonsäuren (Prileschajew-Reaktion) erfolgen. Verfahren zur Herstellung von epoxidierten Pflanzenölen sind zum Beispiel in Smith, March, March's Advanced Organic Chemistry (5. Auflage, Wiley-Interscience, New York, 2001) beschrieben. Bevorzugte epoxidierte Fettsäureester des Glycerins sind Pflanzenöle. Erfindungsgemäß besonders bevorzugter epoxidierter Fettsäureester des Glycerins ist epoxidiertes Sojaöl (CAS 8013-07-8).

Die thermoplastische Formmasse der Schichten (B) kann darüber hinaus Verarbeitungshilfsmittel, Stabilisatoren, polymere Legierungspartnern (z.B. Elastomeren), Verstärkungsmaterialien (z.B. Glasfasern) und gegebenenfalls weitere Additive ethalten.

Das mehrschichtige thermoplastische Plattenhalbzeug kann durch Zusammenfügen des Kerns (A), bestehend aus kontinuierlich (endlos) faserverstärkten thermoplastischen Verbundwerkstoffen oder aus langfaserverstärkten thermoplastischen Verbundwerkstoffen, und des thermoformbaren thermoplastischen Materials der Schichten (B), in einem oder mehreren Schritten erfolgen.

Hierzu wird auf den Kern (A) in kontinuierlichen oder diskontinuierlichen Prozessen gegebenenfalls unter Temperatureinwirkung und/oder Druck bzw. Vakuum Pulver, Granulat, Schmelze, Vlies, Folie oder Plattenware des thermoformbaren thermoplastischen Materials der Schichten (B) ganzflächig aufgebracht.

Plattenware des thermoplastischen Materials der Schichten der Schichten (B) kann beispielsweise durch Spritzgießen, Extrusion oder Pressverfahren hergestellt werden. Folienware kann durch die gängigen Verfahren zur Folienerzeugung hergestellt werden.

Das thermoformbare thermoplastische Material der Schichten (B) kann durch Laminieren oder Beschichten auf den Kern (A) ganzflächig aufgebracht werden (Oberbach, Baur, Brinkmann, Schmachtenberg, "Saechtling Kunststoff Taschenbuch", Carl Hanser Verlag München Wien 2004, Seiten 264-266):
- Walzenauftrag, insbesondere Schmelzwalzen-Verfahren und Heißschmelz-Verfahren,
- Kaschieren mit Hilfe geeigneter Kaschiermittel (Lack, Leim, Wachs), sogenanntes Nasskaschieren oder Trockenkaschieren mit Wärme und gegebenenfalls Druck, sogenanntes Thermokaschieren.
- Streichen des geschmolzenen oder in einem Lösungsmittel gelösten Materials der Schichten (B) mit dickenbestimmenden Streichmesser (Rakel)
- Vereinigung von Material der Schichten (B) in Form von Folien, Platten oder Vliesen mit Kern (A) mittels eines Kalanders

Die Beschichtung kann aber auch im Tauchverfahren durch Eintauchen des Kernes (A) in eine Schmelze des thermoplastischen Materials der Schichten (B) erfolgen (Oberbach, Baur, Brinkmann, Schmachtenberg, "Saechtling Kunststoff Taschenbuch", Carl Hanser Verlag München Wien 2004, Seiten 272-273).

Das Thermoplastische Material der Schichten (B) kann auch in Form von Platten oder Folien durch Verkleben auf den Kern (A) ganzflächig aufgebracht werden. Polyamide können beispielsweise mit polymeren Schmelzeklebern, Acrylatklebstoffen, oder Lösungen von Polyamid in Ameisensäure verklebt werden.

Der Kern (A) kann mit dem thermoplastischen Material der Schichten (B) auch durch Verschweißen ganzflächig verbunden werden. Bevorzugte Schweißverfahren sind das Ultraschallschweißen, das Heizelementschweißen, das Vibrationsschweißen, das Rotationsreibschweißen oder das Hochfrequenschweißen. (Kunststoff-Handbuch, Bd. 3/4, Seiten 106-107, Carl Hanser Verlag München Wien 1998).

Ein weiteres bevorzugtes Schweißverfahren ist das Laserdurchstrahlschweißen (Oberbach, Baur, Brinkmann, Schmachtenberg, "Saechtling Kunststoff Taschenbuch", Carl Hanser Verlag München Wien 2004, Seite 342). In einer bevorzugten Ausführungsform weist das thermoplastische Material der Schichten (B) eine höhere Transmission für elektromagnetische Strahlung der Wellenlängen 500 - 1500 nm auf als Material (A).

Der Kern (A) aus kontinuierlich (endlos) faserverstärkten thermoplastischen Verbundwerkstoffen oder aus langfaserverstärkten thermoplastischen Verbundwerkstoffen kann vor der Beschichtung beispielsweise mittels den folgenden Prozessen oberflächlich vorbehandelt werden (Ehrenstein, "Handbuch Kunststoff-Verbindungstechnik", Carl Hanser Verlag München 2004, Seiten 494-504):
- Mechanische Behandlung, bevorzugt durch Bürsten oder Schleifen,
- Reinigung mit Flüssigkeiten, bevorzugt mit wässrigen Lösungen oder organischen Lösungsmitteln zur Entfernung oberflächlicher Ablagerungen
- Beflammen, bevorzugt mit Propangas, Erdgas, Stadtgas oder Butan
- Coronabehandlung (Potentialbehaftetes Atmosphärendruck-Plasma)
- Potentialfreie Atmosphärendruck-Plasmabehandlung
- Niederdruck-Plasmabehandlung (Luft- und O₂-Atmosphäre
- UV-Lichtbehandlung
- Chemische Vorbehandlung, z.B. naßchemisch oder mittels Gasphasenvorbehandlung
- Primer und Haftvermittler

Die erfindungsgemäßen mehrschichtigen thermoplastischen Plattenhalbzeuge weisen bevorzugt die Schichtung (B)-(A)-(B') auf. Die Halbzeuge (B)-(A)-(B') können so hergestellt werden, dass die Kanten mit Material der Schichten (B) oder anderen thermoplastischen Materialien mit ähnlichem Schmelzpunkt wie der Schichten (B) abgeschlossen bzw. bedeckt bzw. versiegelt werden. Erfindungsgemäß bevorzugt sind Plattenhalbzeuge worin der Kern (A) aus PA6 und die Schichten (B) aus PA66 bestehen oder worin der Kern (A) aus PA6 und die Schichten (B) aus PA6 bestehen oder worin der Kern (A) aus PA66 und die Schichten (B) aus PA66bestehen oder worin der Kern. (A) aus PBT und die Schichten (B) aus PET bestehen oder worin der Kern (A) aus PP und die Schichten (B) aus PA6 bestehen.

In einer bevorzugten Ausführungsform hat das Plattenhalbzeug bei Beginn der Umformung eine Temperatur, die mindestens 3 °C über dem Schmelzpunkt von Material (A) aber maximal 10 °C über Schmelzpunkt von Material der Schichten (B) liegt. Die Bestimmung des Schmelzpunktes erfolgt mittels DSC (Maximum der Peaklage beim ersten Auffheizen, Aufheizrate 20 °C/min).

### Ausführungsbeispiele

Als erfindungsgemäße Beispiele sind die dreischichtigen thermoplastischen Faser-Matrix-Halbzeuge mit einem Aufbau (B) ― (A) ― (B') genannt. Die erfindungsgemäßen Beispiele 1 ― 12 lassen sich leicht verformen. Im Zuge der Verformung ist nur ein geringes Maß an Faserschädigung zu erwarten. Vergleichsbeispiel 1 hingegen ist schwer verformbar, dabei tritt eine ausgeprägte Faserschädigung auf.

| | Schicht (A) | Schicht (B) = (B') | Besonders bevorzugte Temperatur unmittelbar vor Umformung [°C] |
|---|---|---|---|
| Beispiel 1 | PA6 mit 47 Vol.-% Endlosglasverstärkung (TEPEX^{®} dynalite 102-RG600(4)/47%, Dicke: 2 mm, Flächengewicht 600 Gramm/m², Köper, Kette:Schuß 50:50)¹ | PA66 unverstärkt (Durethan^{®} A30)⁵ | 253 - 258 |
| Beispiel 2 | PA6 mit 47 Vol.-% Endlosglasverstärkung (TEPEX^{®} dynalite 102-RG600(4)/47%, Dicke: 2 mm, Flächengewicht 600 Gramm/m², Köper, Kette:Schuß 50:50)¹ | PA66 GF15 (Durethar^{®} DP 2-2240/15 H2.0)⁶ | 260 - 265 |
| Beispiel 3 | PA6 mit 47 Vol.-% Endlosglasverstärkung (TEPEX^{®} dynalite 102-RG600(4)/47%, Dicke: 2 mm, Flächengewicht 600 Gramm/m², Köper, Kette:Schuß 50:50)¹ | PA66 GF25 (Durethan^{®} AKV325 H2.0)⁷ | 261 - 268 |
| Beispiel 4 | Gusspolyamid PA6-G mit 65 Gew.-% Endlosglasverstärkung | PA66 GF25 (Durethari^{®} AKV325 H2.0)⁷ | 261 - 268 |
| Beispiel 5 | PA6 mit 47 Vol.-% Endlosglasverstärkung (TEPEX^{®} dynalite 102-RG600(4)/47%, Dicke: 2 mm, Flächengewicht 600 Gramm/m², Köper, Kette:Schuß 50:50)¹ | PA66 GF25 (Durethan^{®} AKV325 H2.0)⁷ | 261 - 268 |
| Beispiel 6 | PA6 mit 47 Vol.-% Endlosglasverstärkung (TEPEX^{®} dynalite 102-RG600(4)/47%, Dicke: 2 mm, Flächengewicht 600 Gramm/m², Köper, Kette:Schuß 50:50)¹ | PA6 GF15 (Durethan^{®} BKV315Z H2.0)⁸ | 223 - 230 |
| Beispiel 7 | PA6 mit 47 Vol.-% Endlosglasverstärkung (TEPEX^{®} dynalite 102-RG600(4)/47%, D i c k e: 2 m m, Flächengewicht 600 Gramm/m², Köper, Kette:Schuß 50:50)¹ | PA6 GF25 (Durethan^{®} BKV325Z H2.0)⁹ | 223 - 230 |
| Beispiel 8 | PBT mit 65 Gew.-% Endlosglasverstärkung | PET unverstärkt | 240-260 |
| Beispiel 9 | PP mit 45 Vol.-% Endlosglasverstärkung (TEPEX^{®} dynalite 104-FG290(4)/45%, Dicke: 1 mm, Flächengewicht 290 gr/m², Köper, Kette:Schuß 50:50)² | (PA6+PP) GF30 ¹¹ | 223 - 230 |
| Beispiel 10 | PA6 mit 45 Vol.-% Hybridgewebe aus Carbon- und Aramidfasern (TEPEX^{®} dynalite 502-CA210(4)/45%, Dicke: 0,8 mm, Flächengewicht 210 gr/m², Köper, Kette:Schuß 50:50)³ | PA66 GF15 (Durethan^{®} DP 2-2240/15 H2.0)⁶ | 260 - 265 |
| Beispiel 11 | PA66 mit 45 Vol.-% Carbonfaserverstärkung (TEPEX^{®} dynalite 201-C200(4)/45%, Dicke: 1 mm, Flächengewicht 200 gr/m², Köper, Kette:Schuß 50:50)⁴ | PA66 GF25 (Durethan^{®} AKV325 H2.0)⁷ | 261 - 268 |
| Beispiel 12 | Gusspolyamid PA6-G mit 65 Gew.-% Endlosverstärkung aus Aramidfaser | PA66 GF15 (Durethan^{®} DP 2-2240/15 H2.0)⁶ | 260 - 265 |
| Vergleich 1 | PA6 mit 47 Vol.-% Endlosglasverstärkung (TEPEX^{®} dynalite 102-RG600(4)/47%, Dicke: 2 mm, Flächengewicht 600 Gramm/m², Köper, Kette:Schuß 50:50)¹ | PA6 unverstärkt (Durethan^{®} B30S)¹⁰ | 215 - 220 |

| | | | |
|---|---|---|---|
| ¹⁻⁴ Handelsprodukt der Bond-Laminates GmbH ⁵⁻¹⁰ Handelsprodukte der Lanxess Deutschland GmbH ¹¹ Blend aus PA6 (Durethan B29 von Lanxess Deutschland GmbH) mit 15 Gew.-% Homo-Polypropylen und 5 Gew.-% Exxelor VA1801, verstärkt mit 30 Gew.-% Glasfaser (CS7928 von Lanxess N.V.) | | | |

## Patentansprüche

1. Mehrschichtige thermoplastische in Sandwich-Bauweise aufgebaute Plattenhalbzeuge enthaltend einen Kern (A) der Schichtdicke 0,3 bis 5 mm aus kontinuierlich endlos faserverstärkten thermoplastischen Verbundwerkstoffen oder aus langfaserverstärkten thermoplastischen Verbundwerkstoffen der ganzflächig an Ober- und/oder Unterseite mit wenigstens einer Schicht einer thermoformbaren thermoplastischen Formmasse (B) der Schichtdicke 0,1 bis 3 mm verbunden ist, welche einen vergleichbaren oder höheren Schmelzpunkt als die Matrix des faserverstärkten thermoplastischen Verbundwerkstoffes im Kern besitzt und bei der Umformtemperatur im Bereich der Scherraten von 1/s ― 100/s eine mindestens um 10% höhere Schmelzviskosität gemessen nach ISO 11443 bei Restfeuchtegehalt < 0,03% aufweist wobei der Kern (A) mindestens eine Verstärkungsfaser zu 0,001 bis 80 Gew.-% enthält und diese einen Faserdurchmesser von 3 bis 40 µm aufweist.

2. Plattenhalbzeuge gemäß Anspruch 1 wobei die Schichten (A) und die Schichten (B) verbunden sind durch Kleben, Verschweissen, Laminieren, Kaschieren, Kalandrieren.

3. Plattenhalbzeuge gemäß einem der Ansprüche 1 oder 2, **dadurch gekennzeichnet, dass** die Schichten (B) durch Beschichtungsprozesse auf den Kern (A) aufgebracht werden.

4. Plattenhalbzeuge gemäß einem der Ansprüche 1 bis 3, **dadurch gekennzeichnet, dass** der Kern (A) aus PA6 und die Schichten (B) aus PA66 bestehen oder dass der Kern (A) aus PA6 und die Schichten (B) aus PA6 bestehen oder dass der Kern (A) aus PA66 und die Schichten (B) aus PA66bestehen oder dass der Kern. (A) aus PBT und die Schichten (B) aus PET bestehen oder dass der Kern (A) aus PP und die Schichten (B) aus PA6 bestehen.

5. Verwendung der mehrschichtigen thermoplastischen Plattenhalbzeuge gemäß einem der Ansprüche 1 bis 4 in mechanisch belasteten Bauteilen.

6. Verwendung gemäß Anspruch 5, **dadurch gekennzeichnet, dass** es sich um mechanisch belastete Bauteile in Kraftfahrzeugen, Flugzeugen oder Windenergieanlagen handelt.

7. Verfahren zur Herstellung mehrschichtiger thermoplastischer in Sandwich-Bauweise aufgebauter Plattenhalbzeuge gemäß der Ansprüche 1 bis 4, **dadurch gekennzeichnet, dass** man Kern (A), bestehend aus kontinuierlich (endlos) faserverstärkten thermoplastischen Verbundwerkstoffen oder aus langfaserverstärkten thermoplastischen Verbundwerkstoffen, mit dem thermoformbaren thermoplastischen Material der Schichten (B), in einem oder mehreren Schritten zusammenfügt.
